(19) Europäisches Patentamt / European Patent Office / Office européen des brevets

(11) **EP 2 846 533 B1**

(12) **FASCICULE DE BREVET EUROPEEN**

(45) Date de publication et mention
de la délivrance du brevet:
**17.02.2016 Bulletin 2016/07**

(51) Int Cl.:
*H04N 5/335* (2006.01)    *H04N 19/10* (2014.01)

(21) Numéro de dépôt: **14183982.9**

(22) Date de dépôt: **08.09.2014**

(54) **Dispositif d'acquisition compressive d'une image**

Vorrichtung zur komprimierten Bilderfassung

Device for compressive image acquisition

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **10.09.2013 FR 1358674**

(43) Date de publication de la demande:
**11.03.2015 Bulletin 2015/11**

(73) Titulaire: **COMMISSARIAT A L'ENERGIE
ATOMIQUE ET AUX
ENERGIES ALTERNATIVES
75015 Paris (FR)**

(72) Inventeurs:
• **Guicquero, William
  91440 BURES-SUR-YVETTE (FR)**
• **Dupret, Antoine
  91400 ORSAY (FR)**

(74) Mandataire: **Thibon, Laurent
Cabinet Beaumont
1, rue Champollion
38000 Grenoble (FR)**

(56) Documents cités:
**US-A1- 2010 053 352**

• **JACQUES L ET AL: "CMOS compressed imaging
by Random Convolution", ACOUSTICS, SPEECH
AND SIGNAL PROCESSING, 2009. ICASSP 2009.
IEEE INTERNATIONAL CONFERENCE ON, IEEE,
PISCATAWAY, NJ, USA, 19 avril 2009
(2009-04-19), pages 1113-1116, XP031459429,
ISBN: 978-1-4244-2353-8**
• **RYAN ROBUCCI ET AL: "Compressive Sensing
on a CMOS Separable-Transform Image Sensor",
PROCEEDINGS OF THE IEEE, IEEE. NEW YORK,
US, vol. 98, no. 6, 1 juin 2010 (2010-06-01), pages
1089-1101, XP011307931, ISSN: 0018-9219**

## Description

Domaine

La présente demande concerne le domaine des capteurs d'image CMOS de façon générale, et vise plus particulièrement un capteur d'image CMOS adapté à mettre en oeuvre des méthodes d'acquisition compressive ("compressive sensing" en anglais).

Exposé de l'art antérieur

Un capteur d'image CMOS comprend généralement une pluralité de pixels disposés en lignes et en colonnes. Chaque pixel comporte une photodiode utilisée en inverse, dont la capacité de jonction est déchargée par un photo-courant en fonction d'une intensité lumineuse reçue. La mesure du niveau d'éclairement reçu par un pixel s'effectue en mesurant une grandeur représentative de la tension aux bornes de la photodiode à des instants choisis parmi lesquels la fin d'une période dite d'intégration, avant et après laquelle le pixel est réinitialisé par rechargement de sa photodiode.

Classiquement, lors d'une phase d'acquisition d'une image, pour chaque pixel du capteur, une valeur de sortie représentative du niveau d'éclairement reçu par le pixel pendant l'intégration est lue, numérisée, et mémorisée sous forme numérique. Pour réduire la quantité de données numériques à stocker/traiter en aval du capteur, la phase d'acquisition est souvent suivie d'une phase de compression de l'image numérisée.

Cette méthode classique d'acquisition d'une image numérisée complète, suivie d'une phase de compression de l'image numérisée, présente plusieurs inconvénients. En particulier, l'acquisition d'une image numérisée complète est relativement longue, ce qui constitue une limitation à l'augmentation des cadences d'acquisition des images. En outre, cette acquisition d'une image numérisée complète entraîne une consommation d'énergie électrique relativement importante par les circuits de lecture et de conversion analogique-numérique du capteur. Par ailleurs, la phase de compression de l'image numérisée peut être relativement longue et complexe, et implique de prévoir une unité de traitement numérique du signal dédiée à cette compression en sortie du capteur, éventuellement sur la même puce que le capteur. Ces divers inconvénients posent notamment problème dans les systèmes dans lesquels il existe des contraintes importantes sur l'acquisition et la compression des images en termes de vitesse de traitement et/ou de consommation électrique.

Pour tenter de pallier tout ou partie de ces inconvénients, on a déjà proposé des méthodes dites d'acquisition compressive, dans lesquelles la phase de compression est mise en oeuvre dans le domaine analogique, en amont du ou des convertisseurs analogique-numérique, combinée avec la phase d'acquisition.

Certaines de ces méthodes d'acquisition compressive, que l'on appellera ci-après méthodes d'acquisition compressive à fusionnement de pixels, permettent une acquisition et une compression simultanée de l'image en prévoyant, au lieu de lire et numériser une valeur de sortie représentative d'un niveau d'éclairement reçu par chaque pixel individuellement, d'effectuer une pluralité de mesures non-cohérentes basées chacune sur un support de mesure comportant plusieurs pixels du capteur, par exemple la totalité des pixels du capteur, ou un sous-ensemble de pixels du capteur. Chaque mesure est une somme pondérée des niveaux de luminosité reçus par les différents pixels d'un support de mesure. Les coefficients de pondération sont générés de façon aléatoire ou pseudo aléatoire. Ces coefficients peuvent être binaires (0 ou 1), ce qui facilite la mise en oeuvre des opérations de sommation pondérée. Lors de l'acquisition d'une image, plusieurs mesures avec des jeux de coefficients de pondération différents sont généralement prévues sur un même support de mesure, étant entendu que, pour obtenir un effet de compression, le nombre total de mesures effectuées sur le capteur doit être inférieur au nombre de pixels du capteur. Il est ainsi possible de réduire la durée d'acquisition de l'image et la consommation électrique liée à l'acquisition, notamment grâce au fait qu'une quantité moins importante de données est lue et numérisée par le capteur. En outre, les traitements de compression dans le domaine numérique, postérieurs à l'acquisition, peuvent être réduits ou supprimés.

L'image d'origine peut être reconstruite à partir de l'image compressée et de la matrice des coefficients de pondération utilisés lors de l'acquisition. Cette reconstruction exploite la parcimonie de l'image d'origine dans une base de décomposition particulière, par exemple dans une base en cosinus discrets ou dans une base d'ondelettes.

Les théories de l'acquisition compressive à fusionnement de pixels ont été exposées en détail dans diverses publications, par exemple dans l'article intitulé "An Introduction To Compressive Sensing" d'Emmanuel J. Candès et al.

Par ailleurs, des architectures de capteurs d'image CMOS utilisant l'acquisition compressive à fusionnement de pixels ont été décrites dans les articles intitulés "Block-Based Compressive Sensing in a CMOS Image Sensor", de M. R. Dadkhah et al., et "CMOS Image Sensor With Per-Column $\Sigma\Delta$ ADC and Programmable Compressed Sensing" de Yusuke Oike et al.

D'autres méthodes d'acquisition compressive, que l'on appellera ci-après méthodes d'acquisition compressive sans fusionnement de pixels, permettent une acquisition et une compression simultanée de l'image en prévoyant, au lieu de lire et numériser une valeur de sortie représentative d'un niveau d'éclairement reçu par chaque pixel du capteur, de sélectionner de façon aléatoire ou pseudo-aléatoire un certain nombre de pixels sur le capteur, et de lire et numériser uniquement les valeurs de sortie des pixels sélectionnés. Contrairement à l'acquisition compressive avec fusionnement de pixels, les valeurs des pixels sélectionnées sont ici lues et numérisées individuellement (sans sommation à d'autres valeurs de pixel). Le taux de compression est alors le rapport entre le nombre de pixels sélectionnés en lecture lors de l'acquisition et le nombre total de pixels du capteur.

L'image d'origine peut être reconstruite à partir de l'image compressée, à condition de connaître les positions, dans la matrice de pixels du capteur, des pixels sélectionnés en lecture lors de l'acquisition. Comme dans le cas de l'acquisition compressive à fusionnement de pixels, la reconstruction exploite la parcimonie de l'image d'origine dans une base de décomposition particulière. Cette reconstruction peut être effectuée par des méthodes identiques ou similaires à celles utilisées dans le domaine de l'acquisition compressive à fusionnement de pixels.

Un exemple de système mettant en oeuvre une acquisition compressive sans fusionnement de pixels est présenté dans l'article intitulé "Chaotic Scan: A Low Complexity Video Transmission System for Efficiently Sending Relevant Image Features", de R. Dogaru et al.

On notera que dans le domaine de l'acquisition compressive (avec ou sans fusionnement de pixels), l'utilisation de générateurs pseudo-aléatoires, c'est-à-dire ayant un comportement prédictif, présente l'avantage de permettre, au moment de la reconstruction de l'image d'origine, de pouvoir générer une deuxième fois les valeurs binaires non cohérentes utilisées lors de l'acquisition - comme coefficients de pondération dans le cas d'une acquisition compressive avec fusionnement de pixels - ou comme masque de sélection des pixels à lire dans le cas d'une acquisition compressive sans fusionnement de pixels. On peut ainsi reconstruire l'image d'origine sans avoir à transmettre avec l'image compressée les valeurs binaires non-cohérentes utilisées lors de l'acquisition.

Il existe un besoin pour un capteur d'image CMOS adapté à mettre en oeuvre des méthodes d'acquisition compressive, ce capteur améliorant au moins en partie certains aspects des capteurs de l'art antérieur utilisant l'acquisition compressive. En particulier, il existe un besoin pour un capteur CMOS permettant d'obtenir, à qualité d'image équivalente, un meilleur taux de compression que les capteurs de l'art antérieur utilisant l'acquisition compressive, ou, à taux de compression équivalent, une meilleur qualité d'image que les capteurs de l'art antérieur utilisant l'acquisition compressive.

Des exemples de capteurs d'image CMOS adaptés à mettre en oeuvre des méthodes de compression ont par ailleurs été décrits dans l'article intitulé "CMOS compressed imaging by Random Convolution", de JACQUES L ET AL., dans l'article intitulé "Compressive Sensing on a CMOS Separable-Transform Image Sensor" de RYAN ROBUCCI ET AL., et dans le document US2010/053352.

Résumé

Ainsi, un mode de réalisation prévoit un capteur d'image CMOS comportant : une pluralité de pixels ; un premier circuit analogique de calcul d'un ou plusieurs estimateurs statistiques basés sur des valeurs de sortie analogiques de pixels du capteur ; et un deuxième circuit adapté à mettre en oeuvre un procédé d'acquisition compressive d'une image, ce procédé comprenant l'acquisition de valeurs de sortie basées sur les valeurs de sortie d'une sélection pseudo-aléatoire d'un ou plusieurs pixels du capteur, dans lequel le taux de compression appliqué est fonction du ou des estimateurs statistiques calculés par le premier circuit.

Selon un mode de réalisation, les pixels sont répartis en plusieurs blocs de pixels, et le taux de compression est adapté bloc par bloc en fonction du ou des estimateurs statistiques calculés par le premier circuit.

Selon un mode de réalisation, dans chaque bloc, un ou plusieurs estimateurs statistiques basés sur les valeurs de sortie des pixels du bloc sont calculés par le premier circuit, et le taux de compression du bloc est fonction du ou des estimateurs statistiques calculés pour le bloc.

Selon un mode de réalisation, le deuxième circuit comprend une matrice de capacités commutées.

Selon un mode de réalisation, le deuxième circuit comprend un ou plusieurs opérateurs analogiques de calcul d'estimateurs statistiques.

Selon un mode de réalisation, le procédé d'acquisition compressive est un procédé d'acquisition compressive sans fusionnement de pixels ; le deuxième circuit comprend un circuit de génération de valeurs binaires pseudo-aléatoires à espérance de sortie commandable ; et le taux de compression est ajusté en jouant sur l'espérance de sortie du circuit de génération de valeurs binaires pseudo-aléatoires.

Selon un mode de réalisation, le circuit de génération de valeurs binaires pseudo-aléatoires à espérance de sortie commandable comprend un générateur de valeurs binaires pseudo-aléatoires à espérance de sortie fixe, et un étage d'adaptation d'espérance.

Selon un mode de réalisation, le générateur comprend une matrice de cellules à retard.

Selon un mode de réalisation, l'étage d'adaptation d'espérance comprend une pluralité de cellules d'adaptation d'espérance recevant chacune plusieurs signaux binaires pseudo-aléatoires à espérance de sortie fixe fournis par le générateur, et mettant en oeuvre une fonction d'adaptation d'espérance qui tient compte d'un signal de commande représentatif d'un ou plusieurs estimateurs statistiques calculés par le premier circuit.

Selon un mode de réalisation, le signal de commande est une valeur quantifiée de variance.

Selon un mode de réalisation, le procédé d'acquisition compressive est un procédé d'acquisition compressive avec fusionnement de pixels ; et le taux de compression est ajusté en jouant sur le nombre de mesures d'acquisition compressive effectué sur chaque support de mesure de l'image.

Selon un mode de réalisation, le ou les estimateurs statistiques sont choisis dans le groupe comportant la moyenne, la variance, le coefficient d'asymétrie, la kurtosis, et les moments statistiques d'ordre supérieur à 4.

Selon un mode de réalisation, les pixels sont disposés en matrice.

Selon un mode de réalisation, le ou les estimateurs statistiques calculés par le premier circuit sont numérisés et transmis dans l'image compressée.

## Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 représente schématiquement, sous forme de blocs, un exemple d'un mode de réalisation d'un capteur d'image CMOS adapté à mettre en oeuvre des méthodes d'acquisition compressive ;

la figure 2 représente schématiquement, sous forme de blocs, un exemple d'un mode de réalisation d'un générateur de valeurs binaires pseudo-aléatoires susceptible d'être utilisé dans le capteur de la figure 1 ; et

la figure 3 illustre plus en détail le schéma électrique et le fonctionnement d'un exemple de réalisation d'un pixel susceptible d'être utilisé dans une variante de réalisation du capteur de la figure 1.

## Description détaillée

Par souci de clarté, de mêmes éléments ont été désignés par de mêmes références aux différentes figures. De plus, seuls les éléments utiles à la compréhension des modes de réalisation décrits ci-après ont été détaillés. En particulier, les procédés et dispositifs susceptibles d'être utilisés pour reconstruire des images non compressées à partir d'images capturées en acquisition compressive n'ont pas été détaillés, les modes de réalisation de dispositifs et procédés d'acquisition compressive décrits ci-après étant compatibles avec les procédés et dispositifs de reconstruction usuels du domaine de l'acquisition compressive.

Selon un aspect des modes de réalisation décrits ci-après, on prévoit un capteur d'image CMOS comportant :

une pluralité de pixels ;

des circuits adaptés à calculer, dans le domaine analogique, c'est-à-dire en amont d'un ou plusieurs convertisseurs analogique-numérique du capteur, un ou plusieurs estimateurs statistiques ou pseudo-statistiques basés chacun sur les valeurs de sortie soit de la totalité des pixels du capteur, soit d'un sous-ensemble de pixels du capteur ; et

des circuits de mise en oeuvre d'une méthode d'acquisition compressive, dans lesquels le nombre de valeurs lues, numérisées, et transmises dans l'image finale lors de l'acquisition compressive dépend du ou des estimateurs statistiques calculés pour l'image, de façon à adapter le taux de compression de l'image en fonction de ces estimateurs.

Les estimateurs statistiques calculés sont par exemple des moments statistiques tels que la moyenne (moment d'ordre 1) et/ou la variance (moment d'ordre 2) et/ou le coefficient d'asymétrie (moment d'ordre 3) et/ou la kurtosis (moment d'ordre 4) et/ou des moments d'ordre supérieur à 4. Des estimateurs statistiques autres que des moments peuvent être utilisés, par exemple la variation totale, ou tout autre estimateur pseudo-statistique basé sur la combinaison d'une fonction convexe ou/et d'une fonction concave. Plus généralement, tout estimateur statistique ou pseudo-statistique représentatif du degré de parcimonie de l'image ou d'une portion de l'image peut être utilisé.

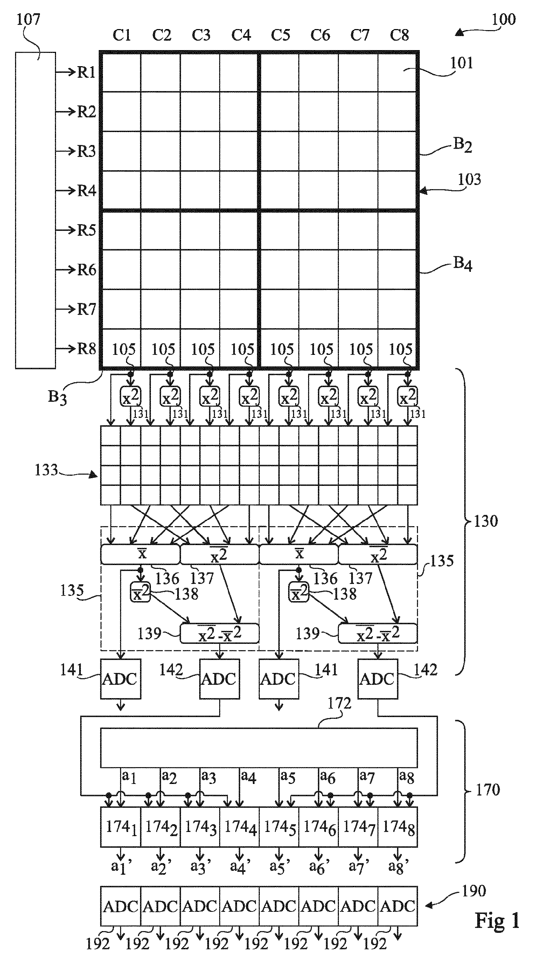

La figure 1 représente schématiquement, sous forme de blocs, un exemple d'un mode de réalisation préféré d'un capteur d'image CMOS 100 adapté à mettre en oeuvre des méthodes d'acquisition compressive. On notera que dans cet exemple, le capteur 100 est adapté à mettre en oeuvre non seulement des méthodes d'acquisition compressive, mais aussi des méthodes d'acquisition d'une image complète non compressée.

Dans le mode de réalisation de la figure 1, le capteur 100 est adapté à mettre en oeuvre des méthodes d'acquisition compressive sans fusionnement de pixels. Il comprend un générateur de valeurs binaires pseudo-aléatoires, utilisé pour sélectionner de façon non-cohérente des pixels à lire, à numériser et à transmettre dans l'image compressée lors d'une acquisition compressive. Selon un aspect du mode de réalisation de la figure 1, l'espérance de sortie du générateur pseudo-aléatoire dépend d'un ou plusieurs estimateurs statistiques calculés pour l'image en cours d'acquisition. Plus particulièrement, on peut prévoir de diminuer l'espérance de sortie du générateur - et donc d'augmenter le taux de compression - lorsque le degré de parcimonie de l'image est élevé, et d'augmenter l'espérance de sortie du générateur - et donc de diminuer le taux de compression - lorsque le degré de parcimonie de l'image est faible.

Le capteur 100 comprend une pluralité de pixels 101 identiques, disposés selon une matrice 103. Dans l'exemple de la figure 1, donné à titre explicatif, la matrice 103 comprend 8 lignes, référencées R1 à R8 (de haut en bas dans l'orientation de la figure) et 8 colonnes, référencées C1 à C8 (de gauche à droite dans l'orientation de la figure), soit 64 pixels. Les modes de réalisation décrits ci-après sont bien entendu compatibles avec des matrices de dimensions différentes et, plus généralement, avec d'autres agencements des pixels, notamment des agencements non matriciels.

Les pixels 101 du capteur 100 sont de préférence des pixels actifs, c'est-à-dire qu'ils comprennent chacun un photodétecteur et un amplificateur de sortie actif à base de transistors MOS. Ceci permet l'acquisition d'images faiblement bruitées par rapport à un capteur à pixels passifs, c'est-à-dire un capteur dans lequel chaque pixel comprend un photodétecteur mais ne comprend pas son propre amplificateur de sortie. Les pixels 101 sont par exemple des pixels à trois transistors MOS pour un photodétecteur, du type couramment désigné dans la technique par l'appellation "pixel 3T", ou des pixels à quatre transistors MOS pour un photodétecteur, du type couramment désigné dans la technique par l'appellation "pixel 4T". Plus généralement, les modes de réalisation décrits sont compatibles avec tous types de pixels connus.

Dans la suite, on considérera à titre d'exemple de réalisation non limitatif, que, dans le capteur 100, les sorties des pixels d'une même colonne de la matrice 103 sont connectées à une même piste conductrice de sortie 105 (partiellement représentée sur la figure 1), et les sorties des pixels de colonnes distinctes de la matrice 103 sont connectées à des pistes de sortie 105 distinctes. De plus, on considèrera dans cet exemple que les pixels du capteur 100 sont commandables simultanément par ligne, c'est-à-dire que dans chaque ligne de pixels, les grilles de commande de transistors de commande réalisant une même fonction (réinitialisation, lecture, transfert de charges, etc.) sont connectées à une même piste conductrice (non représentée) recevant un signal de commande commun à tous les pixels de la ligne, et les grilles de commande de pixels appartenant à des lignes distinctes sont connectées à des pistes de commande distinctes. Dans l'exemple représenté, le capteur 100 comprend un circuit 107 adapté à fournir des signaux de commande aux différentes lignes de pixels de la matrice 103.

Le capteur 100 comprend un circuit 130 adapté à calculer, dans le domaine analogique, un ou plusieurs estimateurs statistiques basés sur des valeurs de sortie de pixels du capteur. Dans l'exemple de la figure 1, on prévoit de diviser la matrice 103 en plusieurs blocs ou sous-ensembles de pixels voisins, et, lors de l'acquisition compressive d'une image, de calculer un ou plusieurs estimateurs statistiques représentatifs du degré de parcimonie de chaque bloc. Dans chaque bloc, une acquisition compressive de la portion d'image définie par le bloc est alors mise en oeuvre, en choisissant le taux de compression du bloc en fonction du ou des estimateurs statistiques du bloc.

Dans l'exemple représenté, donné à titre explicatif, la matrice 103 est divisée en quatre blocs matriciels $B_j$ (avec j entier allant de 1 à 4) de mêmes dimensions, soit deux lignes de deux blocs de 4x4 pixels chacun. Le bloc $B_1$ comprend les pixels communs aux lignes R1 à R4 et aux colonnes C1 à C4, le bloc $B_2$ comprend les pixels communs aux lignes R1 à R4 et aux colonnes C5 à C8, le bloc $B_3$ comprend les pixels communs aux lignes R5 à R8 et aux colonnes C1 à C4, et le bloc $B_4$ comprend les pixels communs aux lignes R5 à R8 et aux colonnes C5 à C8.

Dans cet exemple, le circuit 130 est adapté à calculer, pour chaque bloc, la moyenne des valeurs de sortie des pixels du bloc, et la variance des valeurs de sortie des pixels du bloc. L'homme de l'art saura toutefois adapter l'architecture proposée pour calculer d'autres estimateurs statistiques.

Dans l'exemple représenté, le circuit 130 comprend, au pied de chaque colonne de la matrice 103, un opérateur analogique 131 adapté à élever au carré la valeur analogique lue sur la piste de sortie 105 de cette colonne. Le circuit 130 comprend en outre une matrice 133 de capacités commutées, adaptée à stocker un certain nombre de valeurs analogiques lues sur les pistes de sortie 105 de la matrice de pixels 103, ou en sortie des opérateurs 131.

Lors de la mise en oeuvre d'une acquisition compressive, on prévoit dans cet exemple de commander la lecture des pixels de la matrice 103 ligne par ligne, selon un mode de lecture du type couramment désigné dans la technique par l'appellation anglo-saxonne "rolling shutter" (obturateur déroulant).

Dans un premier temps, on prévoit de lire les lignes de pixels correspondant à une première ligne de blocs $B_j$ de la matrice 103, c'est-à-dire les lignes R1, R2, R3 et R4 dans cet exemple. Pour chaque pixel lu, la valeur de sortie du pixel, ainsi que le carré de cette valeur - calculé par l'opérateur 131 associé à la colonne à laquelle appartient le pixel - sont stockés dans la matrice 133. Dans cet exemple, la matrice 133 est dimensionnée de façon à pouvoir contenir simultanément les valeurs de sortie de tous les pixels d'une ligne de blocs $B_j$, ainsi que, pour chaque pixel, le carré de la valeur de sortie du pixel. Dans l'exemple de la figure 1, la matrice 133 comprend donc au moins (2 blocs)*(4*4 pixels par bloc)* (2 valeurs par pixel) = 64 capacités. Les grandeurs analogiques lues sur les pistes de sortie 105 et en sortie des opérateurs 131 sont par exemple des tensions. Toutefois, l'homme du métier saura adapter les modes de réalisation décrits au cas où d'autres grandeurs analogiques, par exemple des courants, sont lues sur les pistes 105 et/ou en sortie des opérateurs 131.

Une fois la lecture d'une ligne de blocs $B_j$ effectuée, et les valeurs de pixel et valeurs de pixel au carré correspondantes transférées dans la matrice 133, la variance de chacun des blocs lus est calculée, en analogique, sur la base des valeurs contenues dans la matrice 133.

Pour cela, le circuit 130 comprend, outre les éléments susmentionnés, un ou plusieurs opérateurs analogiques 135 de calcul de variance - un opérateur 135 par bloc stocké dans la matrice 133 soit deux opérateurs 135 travaillant en parallèle dans l'exemple de la figure 1.

Chaque opérateur 135 comprend, dans cet exemple, un premier opérateur analogique de calcul de moyenne 136, qui reçoit de la matrice 133 les valeurs de sortie des pixels d'un bloc, et fournit une valeur analogique représentative de la moyenne des valeurs de pixel du bloc, et un second opérateur analogique de calcul de moyenne 137, qui reçoit de la matrice 133 les carrés des valeurs de sortie des pixels du bloc, et fournit une valeur analogique représentative de la moyenne des carrés des valeurs de pixel du bloc. Chaque opérateur 135 comprend en outre, dans cet exemple, un opérateur analogique 138 qui reçoit la valeur de sortie de l'opérateur 136 et élève cette valeur au carré, et un opérateur analogique de soustraction 139 qui reçoit les valeurs de sortie des opérateurs 138 et 137, et fournit une valeur représentative de la différence entre la valeur de sortie de l'opérateur 137 et la valeur de sortie de l'opérateur 138. La valeur de sortie de l'opérateur 139 est ainsi représentative de la variance du bloc, qui est égale à la moyenne des carrés des valeurs de pixel du bloc moins le carré de la moyenne des valeurs de pixel du bloc.

Dans l'exemple représenté, le capteur 100 comprend un convertisseur analogique-numérique (ADC) 142 en sortie de chaque opérateur 135 (soit deux convertisseurs 142 dans l'exemple de la figure 1), permettant de numériser la valeur analogique de variance calculée par l'opérateur 139 correspondant.

Dans l'exemple représenté, le capteur 100 comprend en outre un convertisseur analogique-numérique 141 en sortie de chaque opérateur 135 (soit deux convertisseurs 141 dans l'exemple de la figure 1), permettant de numériser la valeur analogique de moyenne calculée par l'opérateur 136 correspondant. On notera que dans l'exemple décrit ci-après, seule la variance est utilisée pour déterminer le taux de compression à appliquer à chaque bloc d'image. Les convertisseurs analogique-numérique 141 sont donc optionnels. Il peut toutefois être intéressant dans certaines applications de pouvoir disposer de plusieurs estimateurs statistiques pour chaque bloc, et notamment de la moyenne, soit pour déterminer le taux de compression à appliquer au bloc, soit pour d'autres raisons.

Dans le mode de réalisation de la figure 1, on prévoit, pour chaque bloc, de mettre en oeuvre une acquisition compressive des valeurs de pixel du bloc contenues dans la matrice 133, en adaptant le taux de compression du bloc en fonction de la variance du bloc. A titre d'exemple, le taux de compression peut être d'autant plus élevé que la variance est faible, et inversement.

Dans cet exemple, le capteur 100 comprend un étage de numérisation 190 comprenant autant de convertisseurs analogique-numérique 192 que la matrice de pixels 103 comprend de colonnes - soit huit convertisseurs 192 dans l'exemple représenté. Dans le cas d'une acquisition d'une image complète non compressée, les convertisseurs 192 peuvent être reliés directement aux pistes 105 de sortie de colonne de la matrice 103, c'est-à-dire que les valeurs de sortie des pixels sont numérisées directement au fur et à mesure de la lecture, sans passer par la matrice de capacités commutées 133. Dans le cas d'une acquisition compressive, les convertisseurs 192 peuvent être reliés en sortie de la matrice de capacités commutées 133, pour numériser des valeurs analogiques stockées dans la matrice 133. Par soucis de simplification, les connexions entre les pistes de sortie 105 de la matrice 103 et les convertisseurs 192 d'une part, et entre la matrice 133 et les convertisseurs 192 d'autre part, n'ont pas été représentées.

Dans le mode de réalisation de la figure 1, pour la mise en oeuvre de l'acquisition compressive proprement dite, le capteur 100 comprend un circuit 170 de génération de signaux binaires pseudo-aléatoires à espérance de sortie variable. Dans cet exemple, le circuit 170 comprend un générateur 172 de signaux binaires pseudo-aléatoires à espérance de sortie fixe, et un étage d'adaptation d'espérance.

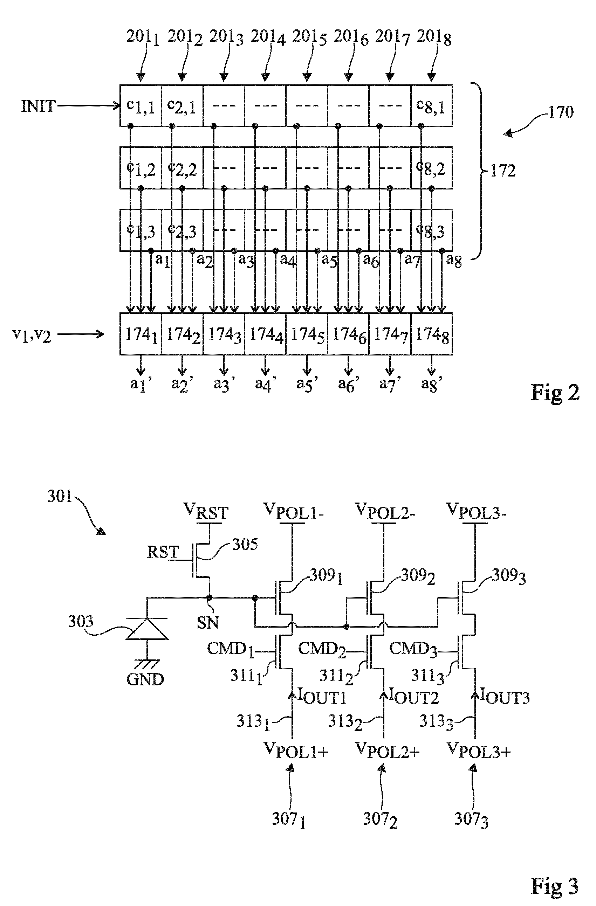

Dans cet exemple, le générateur 172 comprend un nombre de sorties pseudo-aléatoires égal au nombre de colonnes de la matrice de pixels 103, soit huit sorties $a_k$ (avec k entier allant de 1 à 8) dans l'exemple représenté. Dans cet exemple, comme cela sera expliqué plus en détail en relation avec la figure 2, chaque sortie $a_k$ est un mot de 3 bits $a_k(m)$, avec m entier allant de 1 à 3. Chaque bit $a_k(m)$ de chaque sortie $a_k$ du générateur 172 a une espérance fixe - par exemple de 1/2 - ce qui signifie que la probabilité que, pour un tirage, la valeur $a_k(m)$ soit égale à la valeur binaire '1', est de 1/2.

A chaque sortie $a_k$ du générateur 172, est associée une cellule d'adaptation d'espérance $174_k$ qui reçoit les signaux générés sur la sortie $a_k$ par le générateur 172 et fournit un signal pseudo-aléatoire $a_k'$ - un signal binaire dans cet exemple - dont l'espérance dépend d'un signal de commande reçu par la cellule $174_k$. Les cellules $174_k$ forment ensemble l'étage d'adaptation d'espérance du circuit 170. Les différentes cellules $174_k$ peuvent être commandables individuellement.

Dans l'exemple représenté, les sorties binaires $a_1'$, $a_2'$, $a_3'$ et $a_4'$, respectivement $a_5'$, $a_6'$, $a_7'$ et $a_8'$, du circuit 170, sont dédiées à la mise en oeuvre de l'acquisition compressive du premier bloc, respectivement du deuxième bloc, de la ligne de blocs $B_j$ stockée dans la matrice de capacités commutées 133. Dans cet exemple, les cellules d'adaptation d'espérance correspondantes $174_1$, $174_2$, $174_3$ et $174_4$, respectivement $174_5$, $174_6$, $174_7$ et $174_8$, reçoivent un même signal de commande représentatif de la variance du premier bloc, respectivement du deuxième bloc. A titre d'exemple, le signal de commande reçu par les cellules $174_1$ à $174_4$, respectivement $174_5$ à $174_8$, est la variance du premier bloc, respectivement du deuxième bloc, quantifiée sur un ou plusieurs bits - par exemple sur deux bits - par le convertisseur 142 correspondant.

Lors de l'acquisition compressive des blocs d'image contenus dans la matrice 133, on peut prévoir de parcourir la matrice 133 ligne par ligne, et, pour chaque ligne, de lire, numériser et transmettre dans l'image compressée uniquement les valeurs des pixels dont la position dans la ligne coïncide avec un '1' dans le mot de valeurs binaires formé par les signaux des sorties $a_1'$ à $a_8'$ du circuit 170. A chaque changement de ligne de lecture dans la matrice 133, le mot de sortie du circuit 170 peut être mis à jour.

Dans un deuxième temps, on peut prévoir de lire les lignes de la matrice de pixels 103 correspondant à une deuxième ligne de blocs $B_j$, c'est-à-dire les lignes R5, R6, R7 et R8 dans cet exemple, et de stocker dans la matrice 133, pour chaque pixel lu, la valeur de sortie du pixel, ainsi que le carré de cette valeur. Les étapes susmentionnées de calcul de variance et d'acquisition compressive des données stockées dans la matrice 133 peuvent alors être réitérées, et ainsi de suite jusqu'à ce que la totalité de la matrice de pixels 103 ait été traitée.

La figure 2 représente de façon plus détaillée un exemple de réalisation du circuit 170 de génération de signaux binaires pseudo-aléatoires à espérance de sortie variable de la figure 1.

Dans cet exemple, le générateur pseudo-aléatoire 172 à espérance de sortie fixe est un automate cellulaire à comportement chaotique adapté à générer périodiquement huit mots de sortie pseudo-aléatoires $a_1$ à $a_8$ - chaque mot de sortie comportant 3 bits pseudo-aléatoires dans cet exemple. Le générateur 172 comprend un nombre de registres à décalage égal au nombre de mots de sortie à générer, soit huit registres à décalage $201_k$ dans cet exemple. Chaque registre à décalage $201_k$ comprend plusieurs cellules à retard, trois cellules $c_{k,l}$ avec $l$ entier allant de 1 à 3 dans cet exemple. Ainsi, le générateur 172 comprend une matrice de cellules à retard à trois lignes d'indice $l$ et huit colonnes d'indice $k$. Les modes de réalisation décrits ne se limitent bien entendu pas à cet exemple particulier de dimensionnement du générateur pseudo-aléatoire.

Lors de l'initialisation de l'automate, un mot d'initialisation INIT à huit bits est chargé dans la ligne d'indice $l=1$ de la structure à décalage.

A chaque front montant ou descendant d'un signal d'horloge (non représenté), le mot de 8 bits mémorisé dans chaque ligne d'indice $l$ de la matrice est transféré vers la ligne suivante d'indice $l+1$, à l'exception du mot mémorisé dans la ligne d'indice $l=3$ qui est transféré vers les sorties $a_1$ à $a_8$ de la matrice. Dans la ligne d'indice $l=1$, chaque cellule $c_{k,1}$ (avec $k$ allant de 1 à 8) est mise à jour par un circuit (non représenté) mettant en oeuvre une fonction de transition ou fonction d'automate du générateur. A titre d'exemple, la nouvelle valeur de la cellule $c_{k,1}$ peut être basée sur les valeurs de cellules de la ligne d'indice $l=2$, c'est-à-dire des valeurs qu'avaient des cellules de la ligne d'indice $l=1$ au front d'horloge précédent. A titre d'exemple, la fonction de transition du générateur peut être telle que :

$$c_{k,1} = XOR\left(OR\left(c_{k+1,2}, c_{k,2}\right), c_{k-1,2}\right),$$

où XOR désigne la fonction logique OU exclusif et OR désigne la fonction logique OU non exclusif. Les modes de réalisation décrits ne se limitent toutefois pas à cette fonction de transition particulière.

Après un certain nombre de mises à jour de l'automate, le mot à 8 bits en sortie de chaque ligne d'indice $l$ de la matrice a des propriétés pseudo-aléatoires. Dans le cas où la fonction de transition susmentionnée est utilisée, l'espérance de chaque cellule à retard du générateur 172 est égale à 1/2.

Dans le circuit 170, chaque sortie $a_k$ du générateur 172 est constituée par les sorties binaires des trois cellules à retard du registre à décalage de la colonne de rang $k$ de la matrice. Chaque sortie $a_k$ du générateur est couplée à une cellule d'adaptation d'espérance $174_k$. Dans cet exemple, chaque cellule $174_k$ reçoit les valeurs stockées dans les différentes cellules $c_{k,l}$ du registre à décalage $201_k$ du même rang $k$ (soit 3 valeurs dans l'exemple de la figure 2). Plus généralement, à partir de l'enseignement décrit dans l'exemple de la figure 2, l'homme de l'art saura obtenir l'effet d'adaptation d'espérance recherché dès lors que chaque cellule $174_k$ reçoit au moins deux valeurs binaires pseudo-aléatoires provenant de cellules à retard du générateur 172. Dans cet exemple, chaque cellule $174_k$ reçoit en outre un mot numérique de commande en adaptation d'espérance, par exemple un mot de deux bits $(v1,v2)$. Le mot $(v1,v2)$ correspond par exemple à une valeur de variance quantifiée sur deux bits par un convertisseur analogique-numérique 142 dans l'exemple de la figure 1. Chaque cellule $174_k$ met en oeuvre une fonction d'adaptation d'espérance qui, à chaque changement d'état de l'automate, génère une valeur binaire pseudo-aléatoire $a_k'$ à partir des valeurs qu'elle reçoit, en tenant compte du mot de commande en adaptation d'espérance.

La fonction d'adaptation d'espérance est par exemple telle que : $a_k'=c_{k,3}(v1(v2 + c_{k,2}) + v2c_{k,2}c_{k,1}$, c'est-à-dire que :

si $(v1,v2) = (0,0)$, ce qui correspond à une variance faible, $a_k' = 0$, ce qui correspond à une espérance de sortie nulle ;
si $(v1,v2) = (0,1)$, ce qui correspond à une variance moyenne, $a_k' = AND3(c_{k,3},c_{k,2},c_{k,1})$, ce qui correspond à une espérance de sortie de 1/8 ;
si $(v1,v2) = (1,0)$, ce qui correspond à une variance forte, $a_k' = AND2(c_{k,3},c_{k,2})$, ce qui correspond à une espérance de sortie de 1/4 ; et
si $(v1,v2) = (1,1)$, ce qui correspond à une variance très forte, $a_k' = c_{k,3}$, ce qui correspond à une espérance de sortie de 1/2.

Les modes de réalisation décrits ne se limitent toutefois pas à cette fonction d'adaptation d'espérance particulière. On notera de plus que le capteur de la figure 1 ne se limite pas à l'utilisation d'un générateur pseudo-aléatoire du type décrit en relation avec la figure 2. L'homme de l'art saura mettre en oeuvre le fonctionnement recherché en utilisant d'autres types de générateurs pseudo-aléatoires à espérance de sortie commandable.

Un avantage des modes de réalisation décrits en relation avec les figures 1 et 2 est qu'il permettent de réaliser une acquisition compressive d'une image divisée en blocs, en ajustant le taux de compression dans chaque bloc en fonction d'estimateurs statistiques représentatifs du degré de parcimonie du bloc, et donc de son aptitude à être compressé avec des pertes limitées. On peut ainsi améliorer le compromis entre le taux de compression appliqué et la qualité de l'image acquise.

On notera que pour pouvoir reconstruire l'image d'origine à partir de l'image compressée, il convient de transmettre, dans l'image compressée, les valeurs des signaux de commande en adaptation d'espérance appliqués aux cellules $174_k$ lors de l'acquisition compressive des différents blocs d'image, ainsi que le mot INIT d'initialisation du générateur 172. Ceci permet, lors du décodage, de pouvoir générer une deuxième fois les valeurs binaires pseudo-aléatoires utilisées lors de l'acquisition compressive.

En fonction de l'application envisagée et de ses contraintes spécifiques, l'homme du métier saura adapter l'architecture décrite en relation avec les figures 1 et 2, et notamment les circuits de calcul d'estimateurs statistiques. En particulier, on pourra prévoir de sérialiser davantage, respectivement paralléliser davantage les calculs analogiques d'estimateurs statistiques selon que l'on souhaite réduire la quantité de circuits nécessaires à ces calculs, respectivement réduire le temps d'acquisition d'une image ou trame.

On notera que les modes de réalisation décrits peuvent être adaptés à une architecture dite 3D, c'est-à-dire comportant plusieurs niveaux de circuits superposés. Dans ce cas, des calculs analogiques d'estimateurs statistiques peuvent être mis en oeuvre en partie ou en totalité par des circuits analogiques superposés à la matrice de pixels. Ce type d'architecture permet un gain en terme d'encombrement, et peut en outre permettre de paralléliser davantage les opérations de lecture des pixels et de calcul des estimateurs statistiques ou pseudo-statistiques. En outre, le générateur pseudo-aléatoire peut être réalisé dans un niveau de circuit superposé à la matrice de pixels. Ceci peut permettre, dans certains cas, de pouvoir disposer de plus d'espace pour réaliser le générateur pseudo-aléatoire, et par conséquent de pouvoir réaliser un générateur pseudo-aléatoire particulièrement robuste.

La figure 3 illustre un exemple de réalisation d'un pixel CMOS 301 susceptible d'être utilisé dans une variante de réalisation du capteur de la figure 1. Le pixel 301 comprend un photodétecteur 303, une photodiode dans cet exemple, un transistor MOS de réinitialisation 305, et plusieurs étages de lecture, trois étages $307_m$ avec m entier allant de 1 à 3 dans cet exemple, comprenant chacun deux transistors MOS $309_m$ et $311_m$. Dans cet exemple, les transistors 305, $309_m$ et $311_m$ sont des transistors à canal N. L'anode de la photodiode 303 est reliée à un noeud de potentiel de référence bas GND du capteur, par exemple la masse, et la cathode de la photodiode 303 est reliée à un noeud d'accumulation SN du pixel. Le transistor 305 relie le noeud SN à un noeud d'application d'un potentiel $V_{RT}$ de réinitialisation. Dans chaque étage de sortie $307_m$, les transistors $309_m$ et $311_m$ relient le noeud SN à une piste de sortie $313_m$ du pixel, qui peut être commune à plusieurs pixels du capteur. Plus particulièrement, dans chaque étage de sortie $307_m$, le transistor $309_m$ a sa grille connectée au noeud SN, un premier noeud de conduction (source ou drain selon la polarisation appliquée) connecté à un noeud d'application d'un potentiel de polarisation $V_{POLm^-}$, et un deuxième noeud de conduction (drain ou source selon la polarisation appliquée) relié à la piste de sortie $313_m$ correspondante par l'intermédiaire du transistor $311_m$ ou transistor de lecture. En fonctionnement, le pixel 301 reçoit des signaux de commande RST et $CMD_m$ appliqués respectivement sur les grilles des transistors 305 et $311_m$.

Ainsi, le pixel 301 permet de lire simultanément une valeur de sortie du pixel sur plusieurs pistes de sortie $313_m$ distinctes. Le pixel 301 est par exemple configuré pour permettre une lecture en courant sur les pistes de sortie $313_m$. Pour cela, dans chaque étage de lecture $307_m$ du pixel, la piste de sortie $313_m$ est couplée à un potentiel de polarisation $V_{POLm^+}$ supérieur au potentiel $V_{POLm^-}$. Lorsque le transistor $311_m$ correspondant est à l'état passant, le courant $I_{OUTm}$ circulant dans la piste de sortie $313_m$ du pixel est alors représentatif du potentiel du noeud SN du pixel.

La structure de pixel de la figure 3 permet de réaliser certaines opérations de calcul localement au niveau du pixel, en mode courant. On peut ainsi prévoir de réduire la quantité de circuits analogiques nécessaire au calcul des estimateurs statistiques à l'extérieur de la matrice de pixels.

Des modes de réalisation particuliers ont été décrits. Diverses variantes et modifications apparaîtront à l'homme de l'art.

En particulier, moyennant quelques ajustements du capteur à la portée de l'homme du métier, les modes de réalisation décrits dans la présente demande sont compatibles avec une acquisition compressive avec fusionnement de pixels. Pour cela, on peut par exemple prévoir, en aval de la matrice de capacités commutées 133, des circuits adaptés à réaliser des sommations pondérées des valeurs de pixels d'un même bloc d'image stocké dans la matrice 133. On peut par exemple prévoir un générateur pseudo-aléatoire à espérance fixe ou variable, ayant un nombre de sorties binaires égal au nombre de pixels du support de mesure utilisé pour l'acquisition compressive (par exemple un bloc $B_j$). Les mots de valeurs binaires pseudo-aléatoires fournis par le générateur peuvent être utilisés comme coefficients de pondération pour les mesures d'acquisition compressive. Pour ajuster le taux de compression en fonction des estimateurs statistiques calculés pour chaque bloc, on peut jouer sur le nombre de mesures d'acquisition compressive effectué sur chaque support de mesure.

En outre, moyennant quelques ajustements du capteur à la portée de l'homme du métier, les modes de réalisation décrits ci-dessus sont compatibles avec un mode d'acquisition compressive dans lequel l'image n'est pas divisée en blocs, et où le ou les estimateurs statistiques sont calculés à l'échelle de l'image entière. Le taux de compression choisi en fonction du ou des estimateurs statistiques peut alors être le même pour l'image entière.

De plus, dans les modes de réalisation décrits ci-dessus, les blocs d'image utilisés pour calculer le ou les estimateurs statistiques peuvent avoir des dimensions et/ou des coordonnées dans la matrice de pixels différentes de celles des blocs d'image auxquels un même taux de compression est appliqué lors de l'acquisition compressive proprement dite.

Par ailleurs, les modes de réalisation décrits ne se limitent pas au cas où l'image compressée contient uniquement des valeurs de pixels ou des sommes de valeurs de pixels. En particulier, on peut prévoir de transmettre dans l'image compressée d'autres données qui peuvent être des fonctions non linéaires de valeurs de pixel. On peut par exemple prévoir, pour chaque bloc d'image $B_j$, de transmettre, outre les valeurs de pixels ou de sommes de pixels transmises lors de l'acquisition compressive proprement dite, un ou plusieurs estimateurs statistiques (moyenne, variance ou autre) calculés pour le bloc. Les inventeurs ont constaté que ceci permet d'améliorer de façon significative la qualité de l'image reconstruite, pour un coût relativement limité en termes de taux de compression. De plus, à titre d'exemple, dans le capteur 100 de la figure 1, étant donné que les carrés des valeurs de pixel des blocs sont disponibles dans la matrice de capacités commutées 133, on peut prévoir de transmettre dans l'image compressée non seulement des mesures d'acquisition compressive (avec ou sans fusionnement de pixels) portant sur les valeurs de pixel des blocs, mais aussi des mesures portant sur les carrés des valeurs de pixel des blocs. Par exemple, à chaque mise à jour du générateur pseudo-aléatoire utilisé pour les mesures d'acquisition compressive, on peut prévoir d'utiliser le même mot de sortie du générateur pseudo-aléatoire non seulement pour effectuer une ou plusieurs mesures portant sur les valeurs de sortie de pixel du bloc elles-mêmes, mais aussi pour effectuer une ou plusieurs mesures portant sur les carrés des valeurs de sortie de pixel du bloc.

Par ailleurs, pour certaines applications, on peut prévoir de numériser et transmettre dans l'image compressée uniquement les valeurs des estimateurs statistiques calculés par le circuit 130.

On notera que lorsque les valeurs transmises dans l'image compressée sont des combinaisons de valeurs de sortie de plusieurs pixels du capteur, on peut avantageusement obtenir des images de bonne qualité avec des pixels de petites dimensions.

On notera de plus que les modes de réalisation décrits ci-dessus ne se limitent pas à l'exemple particulier susmentionné dans lequel les signaux de commande du taux de compression appliqué à chaque bloc d'image sont des signaux numériques (variances quantifiées par des convertisseurs analogique-numérique 142 dans l'exemple de la figure 1). On pourra prévoir une commande analogique du taux de compression. De plus, les calculs analogiques d'estimateurs statistiques permettant de déterminer le taux de compression à appliquer à chaque bloc peuvent être effectués soit en courant soit en tension. Dans le cas d'une implémentation en courant, on privilégiera l'utilisation de pixels à lecture en courant, par exemple du type décrit en relation avec la figure 3. Dans le cas d'une implémentation en tension, on privilégiera l'utilisation de pixels à lecture en tension, par exemple avec des circuits de traitement analogique disposés en pied de colonne tel que décrit en relation avec la figure 1.

## Revendications

1. Capteur d'image CMOS (100) comportant :

   une pluralité de pixels (101) ;
   un premier circuit analogique (130) de calcul d'un ou plusieurs estimateurs statistiques basés sur des valeurs de sortie analogiques de pixels (101) du capteur (100) ; et
   un deuxième circuit adapté à mettre en oeuvre un procédé d'acquisition compressive d'une image, ce procédé comprenant l'acquisition de valeurs de sortie basées sur les valeurs de sortie d'une sélection pseudo-aléatoire d'un ou plusieurs pixels du capteur, dans lequel le taux de compression appliqué est fonction du ou des estimateurs statistiques calculés par le premier circuit (130).

2. Capteur (100) selon la revendication 1, dans lequel lesdits pixels (101) sont répartis en plusieurs blocs ($B_j$) de pixels (101), et dans lequel, le taux de compression est adapté bloc par bloc en fonction du ou des estimateurs statistiques calculés par le premier circuit (130).

3. Capteur (100) selon la revendication 2, dans lequel :

   dans chaque bloc ($B_j$), un ou plusieurs estimateurs statistiques basés sur les valeurs de sortie des pixels (101) du bloc ($B_j$) sont calculés par le premier circuit (130) ; et
   le taux de compression du bloc est fonction du ou des estimateurs statistiques calculés pour le bloc.

4. Capteur (100) selon l'une quelconque des revendications 1 à 3, dans lequel le deuxième circuit (130) comprend une matrice (133) de capacités commutées.

5. Capteur (100) selon l'une quelconque des revendications 1 à 4, dans lequel le deuxième circuit (130) comprend un ou plusieurs opérateurs analogiques (131, 135) de calcul d'estimateurs statistiques.

6. Capteur (100) selon l'une quelconque des revendications 1 à 5, dans lequel :

ledit procédé d'acquisition compressive est un procédé d'acquisition compressive sans fusionnement de pixels ;
le deuxième circuit comprend un circuit (170) de génération de valeurs binaires pseudo-aléatoires à espérance de sortie commandable ; et
le taux de compression est ajusté en jouant sur l'espérance de sortie dudit circuit (170) de génération de valeurs binaires pseudo-aléatoires.

7. Capteur (100) selon la revendication 6, dans lequel le circuit (170) de génération de valeurs binaires pseudo-aléatoires à espérance de sortie commandable comprend un générateur (172) de valeurs binaires pseudo-aléatoires à espérance de sortie fixe, et un étage d'adaptation d'espérance.

8. Capteur (100) selon la revendication 7, dans lequel le générateur (172) comprend une matrice de cellules à retard ($c_{k,l}$).

9. Capteur (100) selon la revendication 7 ou 8, dans lequel l'étage d'adaptation d'espérance comprend une pluralité de cellules d'adaptation d'espérance ($174_k$) recevant chacune plusieurs signaux binaires pseudo-aléatoires à espérance de sortie fixe fournis par le générateur (172), et mettant en oeuvre une fonction d'adaptation d'espérance qui tient compte d'un signal de commande (v1,v2) représentatif d'un ou plusieurs estimateurs statistiques calculés par le premier circuit (130).

10. Capteur (100) selon la revendication 9, dans lequel ledit signal de commande (v1, v2) est une valeur quantifiée de variance.

11. Capteur (100) selon l'une quelconque des revendications 1 à 5, dans lequel :

ledit procédé d'acquisition compressive est un procédé d'acquisition compressive avec fusionnement de pixels ; et
le taux de compression est ajusté en jouant sur le nombre de mesures d'acquisition compressive effectué sur chaque support de mesure ($B_j$) de l'image.

12. Capteur (100) selon l'une quelconque des revendications 1 à 11, dans lequel le ou les estimateurs statistiques sont choisis dans le groupe comportant la moyenne, la variance, le coefficient d'asymétrie, la kurtosis, et les moments statistiques d'ordre supérieur à 4.

13. Capteur (100) selon l'une quelconque des revendications 1 à 12, dans lequel lesdits pixels (101) sont disposés en matrice (103).

14. Capteur (100) selon l'une quelconque des revendications 1 à 13, dans lequel le ou les estimateurs statistiques calculés par le premier circuit (130) sont numérisés et transmis dans l'image compressée.

**Patentansprüche**

1. Ein CMOS Bildsensor (100), wobei der Bildsensor folgendes aufweist:

eine Vielzahl von Pixel (101);
einen ersten analog Schaltkreis (130), zum Berechnen einer oder einer Vielzahl von statistischen Schätzern, basierend auf den analogen Ausgabewerten der Pixel (101) des Sensors (100); und
einen zweiten Schaltkreis, der adaptiert ist ein komprimierendes Bildabtastverfahren zu implementieren, wobei das Verfahren das Akquirieren von Ausgangswerten aufweist, basierend auf den Ausgangswerten einer pseudo zufälligen Auswahl von einem oder einer Vielzahl von Sensorpixel, wobei die angewendete Kompressionsrate eine Funktion der statistischen Schätzer ist, die durch den ersten Schaltkreis (130) berechnet werden.

2. Der Sensor (100) nach Anspruch 1, wobei die Pixel (101) in eine Vielzahl von Blöcken ($B_j$) von Pixel (101) verteilt werden, und wobei die Kompressionsrate Block für Block adaptiert wird, entsprechend der statistischen Schätzer, die durch den ersten Schaltkreis (130) berechnet werden.

3. Der Sensor (100) nach Anspruch 2, wobei:

in jedem Block ($B_j$), einer oder eine Vielzahl von statistischen Schätzern, basierend auf den Ausgangswerten der Pixel (101) in dem Block ($B_j$) durch den ersten Schaltkreis (130) berechnet werden; und wobei
die Kompressionsrate des Blocks eine Funktion der statistischen Schätzer ist, die für den Blog berechnet werden.

4. Der Sensor (100) nach einem der Ansprüche 1 bis 3, wobei der zweite Schaltkreis (130) ein Array (133) von geschalteten Kondensatoren aufweist.

5. Der Sensor (100) nach einem der Ansprüche 1 bis 4, wobei der zweite Schaltkreis (130) einen oder eine Vielzahl von analogen statistischen Schätz-Berechnungsoperatoren (131, 135) aufweist.

6. Der Sensor (100) nach einem der Ansprüche 1 bis 5, wobei:

das Kompressionsabtastverfahren ein Verfahren des komprimierten Abtastens ohne Pixel Binning bzw. Pixeleinteilung ist;
wobei der zweite Schaltkreis einen Schaltkreis (170) aufweist zum Erzeugen von pseudo zufälligen Binärwerten mit einer steuerbaren Ausgabeerwartung; und wobei
die Kompressionsrate angepasst wird, durch das Variieren der Ausgabeerwartung des pseudo zufälligen Binärwerterzeugungsschaltkreises (170).

7. Der Sensor (100) nach Anspruch 6, wobei der Schaltkreis (170) zum Erzeugen von pseudo zufälligen Binärwerten mit einer steuerbaren Ausgabeerwartung einen Generator (172) von pseudo zufälligen Binärwerten aufweist mit einer festgelegten Ausgabeerwartung, und
eine Erwartungs-Anpassungsstufe.

8. Der Sensor (100) nach Anspruch 7, wobei der Generator (172) ein Array von Verzögerungszellen ($c_{k,l}$) aufweist.

9. Der Sensor (100) nach Anspruch 7 oder 8 wobei die Erwartungs-Anpassungsstufe eine Vielzahl von Erwartungsanpassungszellen ($174_k$) aufweist, wobei jede eine Vielzahl von pseudo zufälligen Binärsignalen empfängt, die eine festgelegte Ausgabeerwartung aufweisen, die von dem Generator (172) bereitgestellt wird, und eine Erwartungsanpassungsfunktion implementiert, die ein Steuersignal (v1, v2) berücksichtigt, das repräsentativ für einen oder eine Vielzahl von statistischen Schätzern ist, die durch den ersten Schaltkreis (130) berechnet werden.

10. Der Sensor (100) nach Anspruch 9, wobei das Steuersignal (v1, v2) ein quantifizierter Varianzwert ist.

11. Der Sensor (100) nach einem der Ansprüche 1 bis 5, wobei:

das Kompressionsabtastverfahren ein Pixel Binning, bzw. ein Pixeleinteilungs-Kompressionsabtastverfahren ist; und wobei
die Kompressionsraten durch das Ändern der Anzahl von Kompressions-Abtast-Messungen angepasst wird, die auf jeder Messungsunterstützung ($B_j$) des Bildes ausgeführt werden.

12. Der Sensor (100) nach einem der Ansprüche 1 bis 11, wobei der/die statistische(n) Schätzer ausgewählt wird/werden aus der Gruppe der Mittelwert, der Varianz, der Asymmetriekoeffizienten, der Kurtosis, und der statistischen Momente von einer Ordnung größer als 4.

13. Der Sensor (100) nach einem der Ansprüche 1 bis 12, wobei die Pixel (101) in einem Array (103) angeordnet sind.

14. Der Sensor (100) nach einem der Ansprüche 1 bis 13, wobei der/die statistische(n) Schätzer, der/die durch den ersten Schaltkreis (130) berechnet wurde(n), digitalisiert wird/werden und in dem komprimierten Bild gesendet wird/werden.

**Claims**

1. A CMOS image sensor (100) comprising:

a plurality of pixels (101);
a first analog circuit (130) for calculating one or a plurality of statistical estimators based on the analog output values of pixels (101) of the sensor (100); and
a second circuit adapted to implement a compressive image sensing method, the method comprising acquiring output values based on the output values of a pseudo-random selection of one or a plurality of sensor pixels, wherein the applied compression rate is a function of the statistical estimator(s) calculated by the first circuit (130).

2. The sensor (100) of claim 1, wherein said pixels (101) are distributed into a plurality of blocks ($B_j$) of pixels (101), and wherein the compression rate is adapted block by block according to the statistical estimators calculated by the first circuit (130).

3. The sensor (100) of claim 2, wherein:

in each block ($B_j$), one or a plurality of statistical estimators based on the output values of the pixels (101) in the block ($B_j$) are calculated by the first circuit (130); and
the compression rate of the block is a function of the statistical estimators calculated for the block.

4. The sensor (100) of any of claims 1 to 3, wherein the second circuit (130) comprises an array (133) of switched capacitors.

**5.** The sensor (100) of any of claims 1 to 4, wherein the second circuit (130) comprises one or a plurality of analog statistical estimator calculation operators (131, 135).

**6.** The sensor (100) of any of claims 1 to 5, wherein:

said compressive sensing method is a method of compressive sensing with no pixel binning;
the second circuit comprises a circuit (170) for generating pseudo-random binary values having a controllable output expectation; and
the compression rate is adjusted by varying the output expectation of said pseudo-random binary value generation circuit (170).

**7.** The sensor (100) of claim 6, wherein the circuit (170) for generating pseudo-random binary values having a controllable output expectation comprises a generator (172) of pseudo-random binary values having a fixed output expectation, and an expectation adaptation stage.

**8.** The sensor (100) of claim 7, wherein the generator (172) comprises an array of delay cells ($c_{k,l}$).

**9.** The sensor (100) of claim 7 or 8, wherein the expectation adaptation stage comprises a plurality of expectation adaptation cells ($174_k$), each receiving a plurality of pseudo-random binary signals having a fixed output expectation delivered by the generator (172), and implementing an expectation adaptation function which takes into account a control signal (v1, v2) representative of one or a plurality of statistical estimators calculated by the first circuit (130).

**10.** The sensor (100) of claim 9, wherein said control signal (v1, v2) is a quantized variance value.

**11.** The sensor (100) of any of claims 1 to 5, wherein:

said compressive sensing method is a pixel binning compressive sensing method; and
the compression rate is adjusted by varying the number of compressive sensing measurements performed on each measurement support ($B_j$) of the image.

**12.** The sensor (100) of any of claims 1 to 11, wherein the statistical estimator(s) are selected from the group comprising the mean, the variance, the asymmetry coefficient, the kurtosis, and statistical moments of an order greater than 4.

**13.** The sensor (100) of any of claims 1 to 12, wherein said pixels (101) are arranged in an array (103).

**14.** The sensor (100) of any of claims 1 to 13, wherein the statistical estimator(s) calculated by the first circuit (130) are digitized and transmitted in the compressed image.

Fig 1

Fig 2

Fig 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2010053352 A

**Littérature non-brevet citée dans la description**

- **EMMANUEL J. CANDÈS.** *An Introduction To Compressive Sensing*
- **M. R. DADKHAH.** *Block-Based Compressive Sensing in a CMOS Image Sensor*
- **YUSUKE OIKE.** *CMOS Image Sensor With Per-Column $\sum\Delta$ ADC and Programmable Compressed Sensing*
- **R. DOGARU.** *Chaotic Scan: A Low Complexity Video Transmission System for Efficiently Sending Relevant Image Features*
- **JACQUES L.** *CMOS compressed imaging by Random Convolution*
- **RYAN ROBUCCI.** *Compressive Sensing on a CMOS Separable-Transform Image Sensor*